# EUROPEAN PATENT APPLICATION

(11) **EP 2 448 341 A1**
(43) Date of publication of application: **02.05.2012**
(21) Application number: 09846348.2
(22) Date of filing: 22.06.2009
(51) Int. Cl.: H04W 56/00, H04L 29/06

(54) **METHOD AND APPARATUS FOR CONTROLLING DOWNLINK DATA SYNCHRONIZATION IN EVOLVED MULTIMEDIA BROADCAST MULTICAST SERVICE (EMBMS) TRANSMISSION**

(71) Applicant: Alcatel Lucent, 75007 Paris (FR)
(72) Inventor: WANG, Yonggang, Shanghai 201206 (CN); WANG, He, Shanghai 201206 (CN); HU, Zhongji, Shanghai 201206 (CN)
(74) Representative: 2SPL Patentanwälte
(86) International application number: PCT/CN2009/072383
(87) International publication number: WO 2010/148548

(57) **Abstract**

The invention proposes a technical scheme for controlling downlink data synchronization in an eMBMS transmission in a radio link control entity in a base station. By determining one length indicator for each service data unit, and meanwhile, each length indicator corresponds to one extension bit, the length indicator and the extension bit of each RLC SDU are byte aligned, and the base station generates different length indicators for the service data units with the different length distribution. By adopting the technical scheme of the invention, , the corresponding radio link control header overhead thereof is fixed for each service data unit, and therefore, even in the case where a consecutive packet loss occurs in the service data unit received by a certain base station, synchronization between it and other base stations receiving correctly can still be achieved.

## Description

### Field of the Invention

The present invention is related to a base station in a wireless communication network, in particular, to a method and apparatus for controlling downlink data synchronization in an eMBMS transmission in a radio link control (RLC, Radio Link Control) entity.

### Background of the Invention

A requirement is proposed in the SYNC protocol of 3GPP 36.300 as following: in the eMBMS transmission, an eNodeB, namely a base station, is able to detect loss of a radio link control service data unit (RLC SDU, Radio Link Control Service Date Unit, which is also referred to as "service data unit" hereafter), and to maintain synchronization with other base stations in the case of loss of consecutive packets. It is known that an Unacknowledge Mode (UM), in which there is no ARQ error correction mechanism in the radio link control entity, is employed in the eMBMS transmission.

Since a sequence number of the radio link control service data unit which has been sent in one transmission window and a total length of the service data units which have been sent before them for each packet, the base station knows how many radio link control service data units have been lost and the length of the lost radio link control service data units if loss of consecutive packets occurs in a data transmission from a gateway to eNodeB interface. On the basis of such information, the base station has to know where a service data unit received correctly after the lost service data units is filled in a transmission block, i.e., the radio link control protocol data unit (RLC PDU, Radio Link Control Protocol Date Unit, which is referred to as "protocol data unit" hereinafter), in order to maintain data transmission synchronization with the other base stations which do not lose a packet. In accordance with the requirement above, a radio link control header overhead of the service data unit of a given number of the lost service data units should not depend on the length distribution of the service data units.

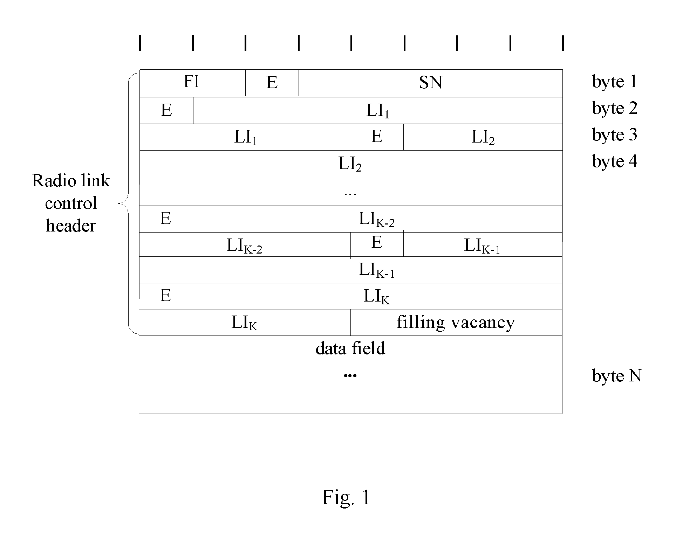

In a radio link control unacknowledge mode data protocol data unit (RLC UMD PDU, referred as to "radio link control protocol data unit" or "protocol data unit", RLC PDU or PDU) format disclosed in 3GPP TS 36.322 V8.4.0 in December, 2008, as shown in Fig. 1, for two consecutive radio link control service data unit, the size of the radio link control header is dependent on the size distribution of the two consecutive radio link control service data units. In the format shown in Fig. 1, each protocol data unit includes a radio link control header and a data field, and the data field is used to be filled with one or more radio link control service data units. Wherein, the header of the protocol data unit includes a FI (Framing Info) field, a SN (Sequence Number) and an extension bit of the SN, a length indicator corresponding to one or more radio link control service data units filled in the data field, and an extension bit of the length indicator. Wherein, there are the length indicator and the extension bit of the length indicator if and only if data of more than one radio link control service data units are included in the data field thereof. Moreover, for the last service data unit or segment of a service data unit in the data field, no length indicator or the corresponding extension bit are assigned thereto.

In accordance with the format of Fig. 1, if a first radio link control service data unit is filled into a first radio link control protocol data unit, a second radio link control service data unit has two segments, wherein the first segment is filled into the first radio link control protocol data unit, and the second segment is filled into a second radio link control protocol data unit, there will be a radio link control header overhead of 2 bytes for each radio link control service data unit.

If a radio link control protocol data unit is just filled with two radio link control service data units, the corresponding radio link control header overhead in the radio link control protocol data unit is 2 bytes.

If a radio link control protocol data unit is filled with a first segment of a first radio link control service data unit, and a second radio link control protocol data unit is filled with a second segment of the first radio link control service data unit and a second radio link control service data unit, the corresponding radio link control header overhead in the second radio link control protocol data unit is 3 bytes for the two radio link control service data units.

It can be seen that since the radio link control header overhead of two consecutive the radio link control service data units are dependent on the size distribution of those two, if two consecutive packets are lost, the base station can not know the radio link control header overhead of those two radio link control service data units, and can not accurately fill the radio link control protocol data unit corresponding thereto, either, resulting in a loss of synchronization of downlink data in the eMBMS transmission of multiple base stations.

### Summary of the Invention

For the problem addressed in the Background, a technical scheme for controlling downlink data synchronization in an eMBMS transmission in a radio link control entity in a base station of a wireless communication network is proposed in the present invention. A length indicator and an extension bit of each RLC SDU are byte aligned by determining a length indicator for each service data unit while each length indicator corresponds to one extension bit, and for each service data unit, the corresponding radio link control header overhead thereof is fixed.

In accordance with a first aspect of the invention, it is provided a method of controlling downlink data synchronization in an eMBMS transmission in a radio link control entity in a base station of a wireless communication network, wherein each radio link control service data unit corresponds to one length indicator, each length indicator corresponds to one extension bit, the length indicator and the extension bit of each radio link control service data unit are byte aligned. The method comprises the steps of: determining whether a last segment of a radio link control service data unit or an entire radio link control service data unit is filled into the end of one radio link control protocol data unit; generating a first specific length indicator for said last segment or said entire radio link control service data unit if the last segment of the radio link control service data unit or the entire radio link control service data unit is filled into the end of one radio link control protocol data unit; filling said first specific length indicator and the corresponding extension bit thereof into the next radio link control protocol data unit.

In accordance with the second aspect of the invention, it is provided a synchronization control apparatus for controlling downlink data synchronization in an eMBMS transmission in a radio link control entity in a base station of a wireless communication network, wherein each radio link control service data unit corresponds to one length indicator, each length indicator corresponds to one extension bit, the length indicator and the extension bit of each radio link control service data unit are byte aligned. The synchronization control apparatus comprises: a first determining unit for determining whether a last segment of an radio link control service data unit or an entire radio link control service data unit is filled into the end of one radio link control protocol data unit; a generating unit for generating a first specific length indicator for said last segment or said entire radio link control service data unit if the last segment of the radio link control service data unit or the entire radio link control service data unit is filled into the end of one radio link control protocol data unit; a filling unit for filling said first specific length indicator and the corresponding extension bit thereof into the next radio link control protocol data unit.

By adopting the technical scheme of the invention, , the corresponding radio link control header overhead thereof is fixed for each service data unit, and therefore, even in the case where a consecutive packet loss occurs in the service data units received by specific base station, synchronization between it and other base stations receiving correctly can still be achieved.

### Brief Description of Drawings

The features, objects and advantages of the invention will be more apparent by reading the detailed description made for the unlimited embodiments with reference to the drawings.
Fig. 1 is a format of a radio link control unacknowledge mode protocol data unit in the related art;
Fig. 2 is a schematic diagram for a radio link control unacknowledge mode protocol data unit in accordance with an embodiment of the invention;
Fig. 3 is a flow chart for a method of controlling downlink data synchronization in an eMBMS transmission in a radio link control entity in a base station of a wireless communication network;
Fig. 4 is another flow chart in accordance with another embodiment of the invention;
Fig. 5 is one flow chart in accordance with yet another embodiment of the invention;
Fig. 6 is a schematic diagram for filling a radio link control service data unit into a radio link control protocol data unit in accordance with an embodiment of the invention;
Fig. 7 is a flow chart for processing the case where packet loss occurs for radio link control service data unit in a base station of a wireless communication network in accordance with an embodiment of the invention;
Fig. 8 is an example for filling a lost service data unit into a protocol data unit by a base station in the case shown in Fig. 6;
Fig. 9 is a structural schematic diagram of a synchronization control apparatus 900 for controlling downlink data synchronization in an eMBMS transmission in a radio link control entity in a base station of a wireless communication network;
wherein identical or similar reference numbers refer to identical or similar step features or apparatuses (modules).

### Detailed Description of Embodiments

The exemplary description for embodiment of the invention will be made in connection with the accompany drawings hereinafter.

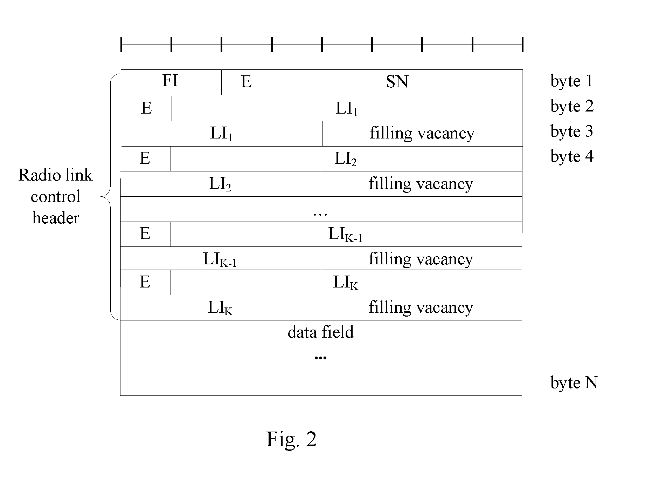

Fig. 2 illustrates a schematic diagram for the format of a radio link control protocol data unit in accordance with an embodiment of the invention. In Fig. 2, the protocol data unit includes two parts: a radio link control header and a data field. The data field is used to be filled with one or more service data units or segments thereof. Specifically, it is understood by the skilled in this art that, in accordance with the size of the data field and the size of the service data unit, one data field can be filled with a plurality of complete service data units, can be filled with one or two segments of the service data unit and a plurality of complete service data units, or can be filled with only one segment of one service data unit, etc.. For the convenience of the description, a service data unit or segment of service data unit filled into the data field is referred as to an element.

Wherein, the radio link control header includes a FI field, a SN field and the extension bit E of SN; a length indicator LIᵢ and the corresponding extension bit E thereof. The FI field has two bits, in which the first bit indicates whether the first element in the data field is segment of service data unit, and the second bit indicates whether the last element in the data field is segment of service data unit. Each extension bit E is 1 bit. The extension bit E before the SN being "1" means that the length indicator is immediately after the sequence number SN of the protocol data unit, SN is 5 bits, and the extension bit E before LI₁ being "1" means that the length indicator is immediately after LI₁. The extension bit E before the last length indicator LIₖ being "0" means that the data field is right after LIₖ. The length of the length indicator is 11 bits. Thus, for each length indicator and the corresponding extension bit thereof, they occupy only 12 bits, and for the purpose of byte alignment, four bits are filled for each pair of the length indicator and the corresponding extension bit thereof.

Generally, the meaning of the length indicator LIᵢ refers to the length of the i-th element in the data field, i.e., the length of a complete service data unit or the length of a segment of service data unit, and the length is in unit of bytes, and is referred to as a general length indicator. In some particular cases, the meaning of the length indicator does not refer to the length of the element in the data field, and is referred to as a specific length indicator. This will be depicted in detail hereinafter.

Unlike the format shown in Fig. 1, there is a filling vacancy of four bits after each length indicator. Thus, each length indicator and the corresponding extension bit thereof are byte aligned. The meaning of byte-alignment is that each length indicator and the corresponding extension bit thereof occupy a multiple of byte in the radio link control header. In the example shown in Fig. 2, each length indicator and the corresponding extension bit thereof occupy two bytes. It should be understood by the skilled in the art that the format shown in Fig. 2 is merely an example, and the number of the bytes occupied by the length indicator and the corresponding extension bit thereof can be determined in accordance with the practical needs.

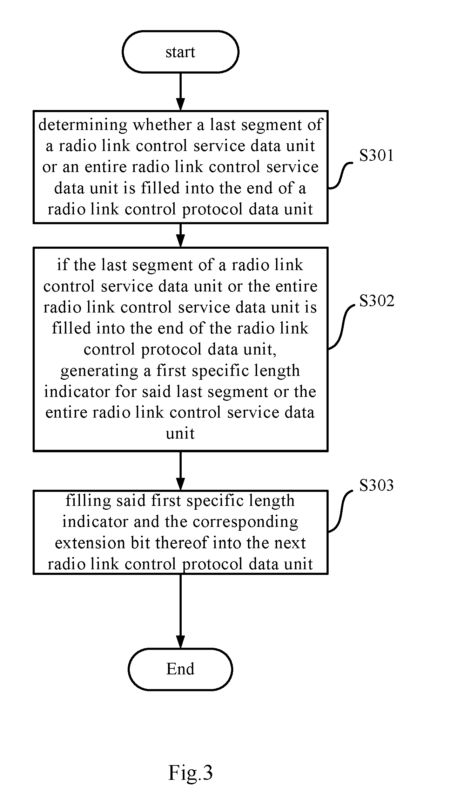

Fig. 3 illustrates a method flow chart for controlling downlink data synchronization in an eMBMS transmission in a radio link control entity in a base station of a wireless communication network. The flow shown in Fig. 3 will be depicted in connection with the format of the protocol data unit described in Fig. 2.

Firstly, in step S301, the base station determines whether the last segment of one radio link control service data unit or one entire radio link control service data unit is filled into the end of one radio link control protocol data unit.

Next, in step S302, the base station generates a first specific length indicator for said last segment or the entire radio link control service data unit if the last segment of one radio link control service data unit or the entire radio link control service data unit is filled into the end of one radio link control protocol data unit.

Then, in step S303, the base station fills the first specific length indicator and the corresponding extension bit thereof into the next radio link control protocol data unit.

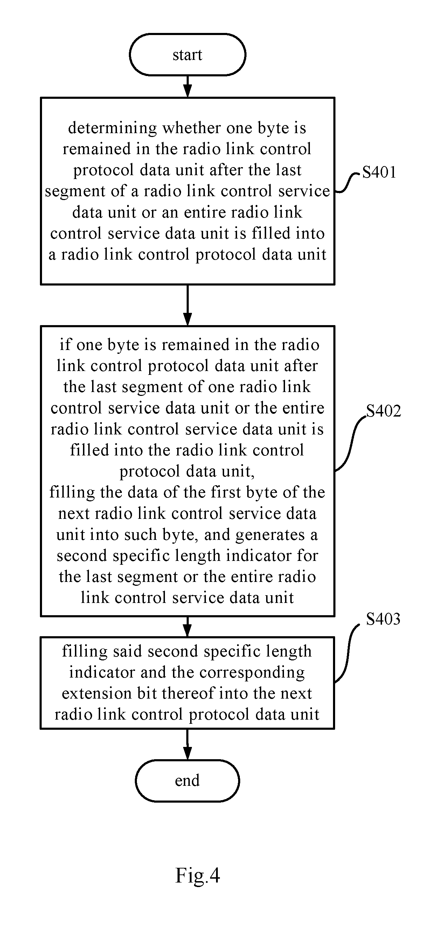

Fig. 4 illustrates another flow chart for another embodiment in accordance with the invention. The flow shown in Fig. 4 will be depicted in connection with the format of the protocol data unit described in Fig. 2.

Firstly, in step S401, the base station determines whether one byte is remained in the radio link control protocol data unit after the last segment of one radio link control service data unit or the entire radio link control service data unit is filled into the radio link control protocol data unit.

Next, in step S402, if one byte is remained in the radio link control protocol data unit after the last segment of one radio link control service data unit or the entire radio link control service data unit is filled into one radio link control protocol data unit, the base station fills the data of the first byte of the next radio link control service data unit into such byte, and generates the second specific length indicator for the last segment or the entire radio link control service data unit.

Finally, in step S403, the base station fills the second specific length indicator and the corresponding extension bit thereof into the next radio link control protocol data unit.

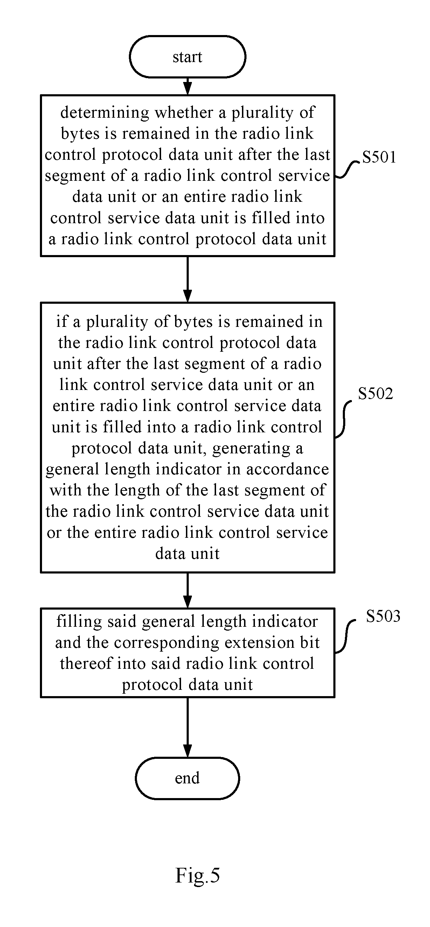

Fig. 5 illustrates one flow chart in accordance with yet another embodiment of the invention. The flow shown in Fig. 5 will be depicted in connection with the format of the protocol data unit described in Fig. 2.

Firstly, in step S501, the base station determines whether a plurality of bytes are remained in the radio link control protocol data unit after the last segment of one radio link control service data unit or the entire radio link control service data unit is filled into one radio link control protocol data unit.

Next, in step S502, if a plurality of bytes are remained in the radio link control protocol data unit after the last segment of one radio link control service data unit or the entire radio link control service data unit is filled into one radio link control protocol data unit, a general length indicator is generated in accordance with the length of the last segment of the radio link control service data unit or the entire radio link control service data unit.

Finally, in step S503, the base station fills the general length indicator and the corresponding extension bit thereof into the radio link control protocol data unit.

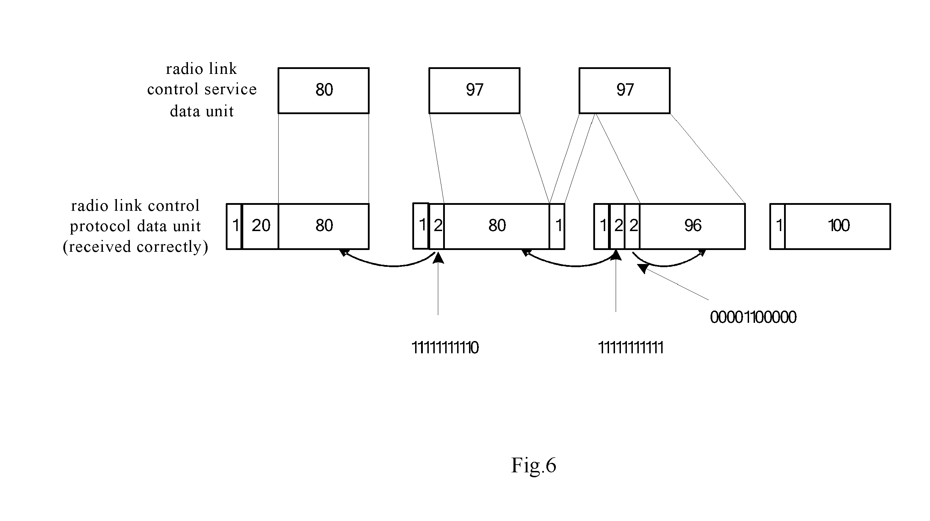

Fig. 6 illustrates a schematic diagram for filling a radio link control service data unit into a radio link control protocol data unit according to an embodiment of the invention, and an exemplary illustration is made for the flows shown in Figs. 3 to 5 in connection with Fig. 6.

Without lose of generality, it is assumed that the transmission capacity of each radio link control protocol data unit is 101 bytes, wherein the FI field and the SN field and the corresponding extension bit thereof occupy 1 byte. The lengths of three service data units to be filled into a protocol data unit are 80, 97 and 97 bytes, respectively.

It is assumed that 20 bytes out of 100 bytes have been occupied by other service data units or segments of the service data units before the first protocol data unit is filled with the first service data unit. The base station generates a first specific length indicator LI₁ for the first service data unit, and fills LI₁ into a second protocol data unit, as the first service data unit with 80 bytes in length is just filled into the end of the first protocol data unit. Accordingly, 2 bytes have been occupied in the second protocol data unit. As only one byte is remained in the second protocol data unit after the second service data unit with 97 bytes in length is filled into the second protocol data unit, the base station fills the first byte of the third service data unit into the last byte of the second protocol data unit, generates a second specific length indicator for the second service data unit, and fills the second specific length indicator and the corresponding extension bit thereof into the very beginning of the third protocol data unit. Next, the base station fills the remaining segment of 96 bytes in the third service data unit into the third protocol data unit; afterwards, two bytes are remained in the third protocol data unit, then the base station generates a general length indicator, i.e., "00001100000" for the segment of 96 bytes in the third service data unit. Thus, the base station can proceed to fill other service data units into the protocol data unit.

A schematic table for the value of the length indicator in accordance with an embodiment of the invention is illustrated in Table 1. In Table 1, all zeros value is reserved, "11111111110" is the value for the first specific length indicator, "11111111111" is the value for the second specific length indicator, and "00000000001" to "11111111101" indicates the value for the general length indicator. Of course, the actual value of the general length indicator is determined by the length of the service data unit or the segment thereof. It is to be explained that Fig. 1 and Table 1 are merely exemplary illustration, and in practice, the value for the general length indicator is determined by the lengths of the actual service data unit and the protocol data unit, the specific value for the specific length indicator is not limited to "11111111110" or "11111111111" as mentioned above, and any values other than the value for the general length indicator can be defined as the values for the specific length indicators.

A detailed depiction for the case in which the base station fills the service data unit into the protocol data unit when the base station receives the radio link control service data unit correctly is made hereinabove. A user device can unpack the protocol data unit according to the filling manner of the base station to obtain respective service data units.

**Table 1 values and meanings for the length indicator**

| Value | Description | Application |
|---|---|---|
| 00000000000 | reserved | |
| 00000000001 to 11111111101 | a general length indicator, representing the length values for the corresponding service data unit or the segment thereof | broadcasting service |
| 11111111110 | a first specific length indicator, representing that the last element of the previous protocol data unit is just an entire service data unit or the last segment of a service data unit, and there is no length indicator of the last element in the previous protocol data unit | broadcasting service |
| 11111111111 | a second specific length indicator, representing that only one byte is remained after the last second element is filled in the previous protocol data unit, the remained one byte is filled with the first byte of the next service data unit, and there is no length indicator of the last second element in the previous protocol data unit | broadcasting service |

A detailed depiction will be made for the process in the base station in the case where a packet loss occurs in the radio link control service data unit hereinbelow. It is to be clear that the packet loss described herein includes the case where the base station does not receive the radio link control service data unit or the case where an incorrect radio link control service data unit is received.

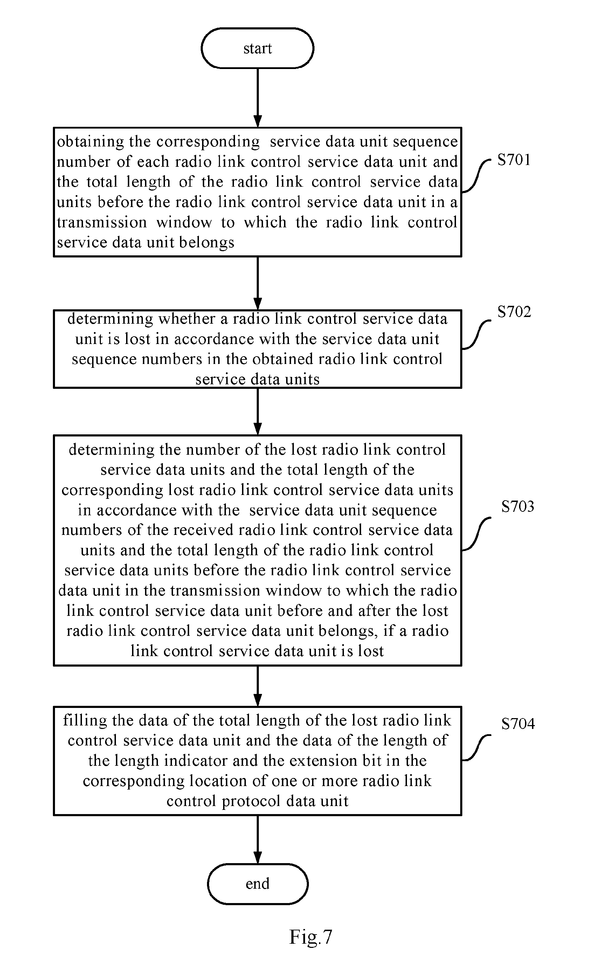

Fig. 7 illustrates a flow chart for processing the case where a packet loss occurs in the radio link control service data unit in the base station of the wireless communication network in accordance with an embodiment of the invention.

Firstly, in step S701, the base station obtains the corresponding service data unit sequence number of each radio link control service data unit and the total length of the radio link control service data units before the radio link control service data unit in the transmission window to which the radio link control service data unit belongs. Wherein the transmission window may be a time window or a window of the number of the radio link control service data units.

For an eMBMS service, the base station obtains the service data unit sequence number and the corresponding service data unit sequence number of the service data unit and the total length of the radio link control service data units before the radio link control service data unit in the transmission window to which the radio link control service data unit belongs through a SYNC protocol header. Specifically, the detailed instruction to the section of the SYNC protocol in the 3GPP organization RAN3 workgroup proposal R3-091303 "SYNC consideration for eMBMS Re19" ( http://www.3gpp.org/ftp/tsg_ran/WG3_Iu/TSGR3_64/Docs/ ) can be referred to, and the description thereof is omitted herein.

Secondly, in step S702, the base station decides whether any radio link control service data unit is lost in accordance with the service data unit sequence number of the obtained radio link control service data units.

Next, if a radio link control service data unit is lost, the base station determines the number of the lost radio link control service data units and the total length of the corresponding lost radio link control service data units in accordance with the service data unit sequence number of the received radio link control service data units and the total length of the radio link control service data units before the radio link control service data unit in the transmission window to which the radio link control service data unit before and after the lost radio link control service data unit belongs.

Finally, the base station fills the data of the total length of the lost radio link control service data units and the data of the length of the corresponding length indicators and the extension bits into the corresponding location of one or more radio link control protocol data units.

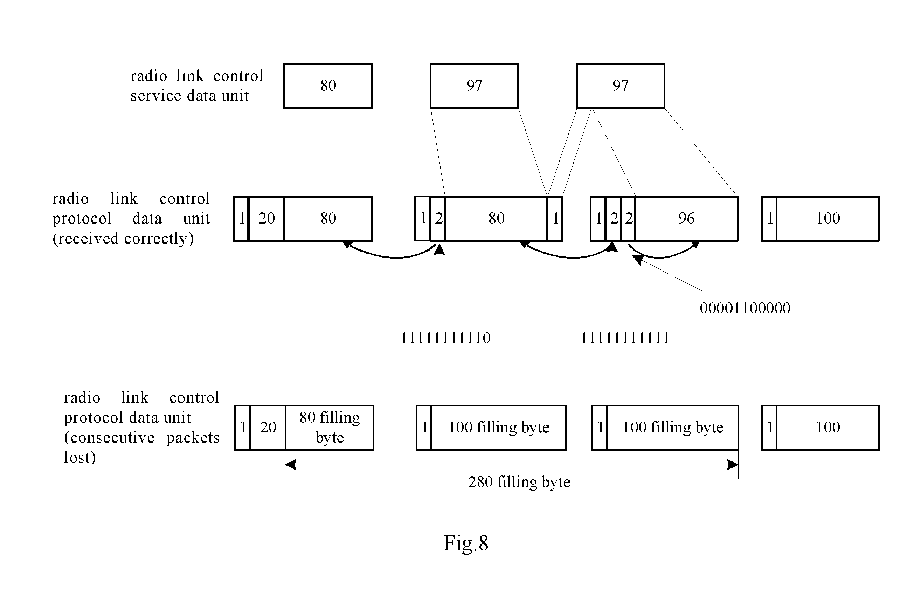

Following the example shown in Fig. 6, an example in which the base station fills the lost service data unit in the protocol data unit is illustrated in Fig. 8 in the case shown in Fig. 6.

Taking an eMBMS transmission as an example, in one transmission window, assuming that the fourth to the sixth service data units are all lost, the base station receives the first to the third service data units, the seventh and the subsequent protocol data units. Then, the base station knows that it does not receive the fourth to the sixth service data units in accordance with the received service data unit sequence number in the SYNC protocol header. Assuming that the total length of the first and the second service data units sent before the third service data unit corresponding to the third service data unit is X bytes, the total length of the six service data units sent before the seventh service data unit corresponding to the seventh service data unit is Y bytes, and the length of the third service data unit is Z bytes, the total length of the lost fourth to sixth service data units is M = Y - X - Z. Without loss of generality, it is assumed that M is 274 bytes. Since three service data units are lost, in accordance with the principle that one service data unit corresponds to one length indicator, the radio link control header overhead corresponding to the three service data units is 6 bytes, and accordingly, the base station should fill 280 bytes in the corresponding protocol data units, as shown in Fig. 8. It can be seen that the base station is still able to achieve synchronization with the base station receiving correctly.

It is to be explained that although the radio link control entity of the base station fills the lost service data units in the protocol data unit and the base station still assigns radio resources for those lost service data unit in physical layer, the transmitting of the service data units is not conducted on the corresponding radio resources,. At this time, other base stations receiving those service data units correctly send those service data units on the corresponding the radio resources.

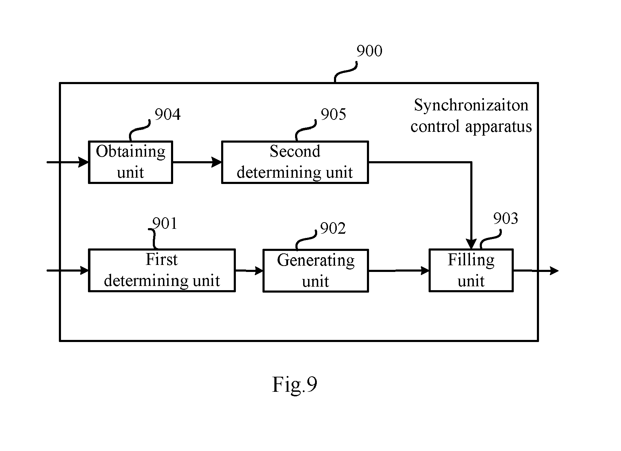

Fig. 9 illustrates a structural schematic diagram of a synchronization control apparatus 900 for controlling downlink data synchronization in an eMBMS transmission in a radio link control entity in a base station of a wireless communication network. The synchronization control apparatus 900 includes a first determining apparatus 901, a generating apparatus 902, a filling unit 903, an obtaining unit 904, and a second determining apparatus 905. Wherein the second determining unit 905 is an optional apparatus.

A detailed depiction for the work process of the synchronization control apparatus 900 in Fig. 9 is made with reference to Fig. 2.

Firstly, the first determining unit 901 determines whether a last segment of a radio link control service data unit or the entire radio link control service data unit is filled into the end of one radio link control protocol data unit.

Next, if the last segment of one radio link control service data unit or the entire radio link control service data unit is filled into the end of one radio link control protocol data unit, the generating unit 902 generates a first specific length indicator for the last segment or the entire radio link control service data unit.

Then, the filling unit 903 fills the first specific length indicator and the corresponding extension bit thereof into the next radio link control protocol data unit.

Optionally, the first determining unit 901 determines whether one byte is remained in the radio link control protocol data unit after the last segment of one radio link control service data unit or the entire radio link control service data unit is filled into one radio link control protocol data unit.

If one byte is remained in the radio link control protocol data unit after the last segment of one radio link control service data unit or the entire radio link control service data unit is filled into one radio link control protocol data unit, the generating unit 902 fills the data of the first byte of the next radio link control service data unit into such byte, and generates the second specific length indicator for the last segment or the entire radio link control service data unit.

Finally, the filling unit 903 fills the second specific length indicator and the corresponding extension bit thereof into the next radio link control protocol data unit.

Optionally, the first determining unit 901 determines whether a plurality of bytes are remained in the radio link control protocol data unit after the last segment of one radio link control service data unit or the entire radio link control service data unit is filled into one radio link control protocol data unit.

If a plurality of bytes are remained in the radio link control protocol data unit after the last segment of one radio link control service data unit or the entire radio link control service data unit is filled into one radio link control protocol data unit, the generating unit 902 generates a general length indicator in accordance with the length of the last segment of the radio link control service data unit or the entire radio link control service data unit.

Finally, the filling unit 903 fills the general length indicator and the corresponding extension bit thereof into the radio link control protocol data unit.

A further exemplary illustration of the work flow of the first determining unit 901, the generating unit 902, and the filling unit 903 will be made in connection with Fig. 6.

Without loss of generality, it is assumed that the transmission capacity of each radio link control protocol data unit is 101 bytes, wherein the FI field and the SN field and the corresponding extension bit thereof occupy 1 byte. The lengths of three service data units to be filled into a protocol data unit are 80, 97 and 97 bytes, respectively.

It is assumed that 20 bytes out of 100 bytes have been occupied by other service data units or segments of the service data units before the first protocol data unit is filled with the first service data unit. The first determining unit 901 determines that the first service data unit with 80 bytes in length is just filled into the end of the first protocol data unit, and then the generating unit 902 generates a first specific length indicator LI₁ for the first service data unit, and the filling unit 903 fills LI₁ into the second protocol data unit. Accordingly, 2 bytes have been occupied in the second protocol data unit, and then, after the second service data unit with 97 bytes in length is filled into the second protocol data unit, the first determining unit 901 determines that only one byte is remained in the second protocol data unit, and then the filling unit 903 fills the first byte of the third service data unit into the last byte of the second protocol data unit, and the generating unit 902 generates a second specific length indicator for the second service data unit, the filling unit 903 fills the second specific length indicator and the corresponding extension bit thereof into the very beginning of the third protocol data unit. Next, the filling unit 903 fills the remaining segment of 96 bytes in the third service data unit into the third protocol data unit; afterwards, the first determining unit 901 determines that two bytes are remained in the third protocol data unit, then the generating unit 902 generates a general length indicator, i.e., "00001100000" for the segment of 96 bytes in the third service data unit. Thus, the synchronization control apparatus 900 can proceed to fill other service data units into the protocol data unit.

The values for the length indicators may be referred to the example in Table 1.

A detailed depiction is made for the case in which the base station fills the service data unit into the protocol data unit when the synchronization control apparatus 900 receives the radio link control service data unit correctly hereinabove. A user device can unpack the protocol data units according to the filling manner of the synchronization control apparatus 900 to obtain respective service data units.

A detailed depiction will be made for the process of the synchronization control apparatus 900 in the case where the packets loss occurs in the radio link control service data unit hereinbelow.

Firstly, the obtaining unit 903 obtains the corresponding service data unit sequence number of each radio link control service data unit and the total length of the radio link control service data units before the radio link control service data unit in a transmission window to which the radio link control service data unit belongs. Wherein, the transmission window may be a time window or a window of the number of the radio link control service data units.

For an eMBMS service, the obtaining unit 903 obtains the service data unit sequence number and the corresponding service data unit sequence number of the service data unit and the total length of the radio link control service data units before the radio link control service data unit in the transmission window to which the radio link control service data unit belongs through a SYNC protocol header.

The second determining unit 905 determines whether the radio link control service data unit is lost in accordance with the service data unit sequence number in the obtained radio link control service data units.

If a radio link control service data unit is lost, the second determining unit 905 determines the number of the lost radio link control service data units and the total length of the corresponding lost radio link control service data units in accordance with the service data unit sequence number of the received radio link control service data units and the total length of the radio link control service data unit before the radio link control service data unit in the transmission window to which the radio link control service data unit before and after the lost radio link control service data unit belongs.

Finally, the filling unit 903 fills the data of the total length of the lost radio link control service data unit and the data of the length of the length indicator and the extension bit in the corresponding location of one or more radio link control protocol data units.

The specific embodiments of the invention are described hereinabove. It is understood that the invention is not limited to the above particular implementation, and the alternation or modification may be made by the skilled in the art within the scope of the appended claims. The technical scheme of the invention may be implemented by software or hardware.

## Claims

1. A method of controlling downlink data synchronization in an eMBMS transmission in a radio link control entity in a base station of a wireless communication network, wherein each radio link control service data unit corresponds to a length indicator, each length indicator corresponds to an extension bit, the length indicator and the extension bit of each radio link control service data unit are byte aligned, the method comprising the steps of:
- determining whether a last segment of a radio link control service data unit or an entire radio link control service data unit is filled into the end of a radio link control protocol data unit;
- generating a first specific length indicator for said last segment or said entire radio link control service data unit, if the last segment of the radio link control service data unit or the entire radio link control service data unit is filled into the end of the radio link control protocol data unit;
- filling said first specific length indicator and the corresponding extension bit thereof into a next radio link control protocol data unit.

2. The method in accordance with claim 1, wherein the method comprises the steps of:
- determining whether one byte is remained in the radio link control protocol data unit after the last segment of a radio link control service data unit or an entire radio link control service data unit is filled into a radio link control protocol data unit;
- if one byte is remained in the radio link control protocol data unit after the last segment of the radio link control service data unit or the entire radio link control service data unit is filled into the radio link control protocol data unit, filling the data of the first byte of a next radio link control service data unit into such byte, and generates a second specific length indicator for the last segment or the entire radio link control service data unit;
- filling said second specific length indicator and the corresponding extension bit thereof into a next radio link control protocol data unit.

3. The method in accordance with claim 1, wherein the method comprises the steps of:
- determining whether a plurality of bytes are remained in the radio link control protocol data unit after the last segment of a radio link control service data unit or an entire radio link control service data unit is filled into one radio link control protocol data unit;
- if a plurality of bytes are remained in the radio link control protocol data unit after the last segment of the radio link control service data unit or the entire radio link control service data unit is filled into one radio link control protocol data unit, generating a general length indicator in accordance with the length of the last segment of the radio link control service data unit or the entire radio link control service data unit;
- filling said general length indicator and the corresponding extension bit thereof into said radio link control protocol data unit.

4. The method in accordance with claim 1, wherein the method comprises the steps of:
- obtaining the corresponding service data unit sequence number of each radio link control service data unit and the total length of radio link control service data units before said radio link control service data unit in a transmission window to which said radio link control service data unit belongs;
- determining whether radio link control service data unit(s) is lost in accordance with service data unit sequence numbers in the obtained radio link control service data units;
- if a radio link control service data unit is lost, determining the number of the lost radio link control service data units and the total length of the corresponding lost radio link control service data unit in accordance with the service data unit sequence numbers of the received radio link control service data unit and the total length of the radio link control service data unit before the radio link control service data unit in a transmission window to which the radio link control service data unit before and after the lost radio link control service data unit belongs;
- filling the data of the total length of the lost radio link control service data units and the data of the length of the length indicator and the extension bit in a corresponding location of one or more radio link control protocol data units.

5. The method in accordance with claim 4, wherein said transmission window is a time window or a window of the number of radio link control service data units.

6. The method in accordance with claim 5, wherein said length indicator and the extension bit of each radio link service data unit occupy 2 bytes.

7. The method in accordance with claim 1, wherein said radio link control protocol data unit includes a frame information field, a protocol data unit sequence number, and an extension bit corresponding to said sequence number.

8. A synchronization control apparatus for controlling downlink data synchronization in an eMBMS transmission in a radio link control entity in a base station of a wireless communication network, wherein each radio link control service data unit corresponds to one length indicator, each length indicator corresponds to one extension bit, the length indicator and the extension bit of each radio link control service data unit are byte aligned, the synchronization control apparatus comprising:
a first determining unit for determining whether a last segment of a radio link control service data unit or an entire radio link control service data unit is filled into the end of a radio link control protocol data unit;
a generating unit for generating a first specific length indicator for said last segment or said entire radio link control service data unit if the last segment of the radio link control service data unit or the entire radio link control service data unit is filled into the end of the radio link control protocol data unit;
a filling unit for filling said first specific length indicator and the corresponding extension bit thereof into a next radio link control protocol data unit.

9. The synchronization control apparatus in accordance with claim 8, wherein said first the determining unit is further for:
- determining whether one byte is remained in the radio link control protocol data unit after the last segment of a radio link control service data unit or an entire radio link control service data unit is filled into a radio link control protocol data unit;
said filling unit is further for:
- if one byte is remained in the radio link control protocol data unit after the last segment of the radio link control service data unit or the entire radio link control service data unit is filled into the radio link control protocol data unit, filling the data of the first byte of a next radio link control service data unit into such byte;
said generating unit is further for:
if one byte is remained in the radio link control protocol data unit after the last segment of the radio link control service data unit or the entire radio link control service data unit is filled into the radio link control protocol data unit, generating a second specific length indicator for said last segment or said entire radio link control service data unit;
said generating unit is further for:
filling said second specific length indicator and the corresponding extension bit thereof into a next radio link control protocol data unit.

10. The synchronization control apparatus in accordance with claim 8, wherein said first the determining unit is further for:
- determining whether a plurality of bytes is remained in the radio link control protocol data unit after a last segment of a radio link control service data unit or an entire radio link control service data unit is filled into a radio link control protocol data unit;
said generating unit is further for:
if a plurality of bytes is remained in the radio link control protocol data unit after the last segment of the radio link control service data unit or the entire radio link control service data unit is filled into the radio link control protocol data unit, generating a general length indicator in accordance with the length of the last segment of the radio link control service data unit or the entire radio link control service data unit;
said filling unit is further for:
filling said general length indicator and the corresponding extension bit thereof into said radio link control protocol data unit.

11. The synchronization control apparatus in accordance with claim 8, wherein said synchronization control apparatus further comprises:
an obtaining unit for obtaining a corresponding service data unit sequence number of each radio link control service data unit and the total length of radio link control service data units before said radio link control service data unit in a transmission window to which said radio link control service data unit belongs;
a second determining unit for determining whether a radio link control service data unit is lost in accordance with a service data unit sequence number in the obtained radio link control service data unit; determining the number of the lost radio link control service data units and the total length of the corresponding lost the radio link control service data units in accordance with the service data unit sequence numbers of the received radio link control service data units and the total length of the radio link control service data units before the radio link control service data unit in the transmission window to which the radio link control service data unit before and after the lost radio link control service data unit belongs, if the radio link control service data unit is lost;
said filling unit is further for:
filling the data of the total length of the lost radio link control service data units and the data of the length of the length indicator and the extension bit in the corresponding location of one or more radio link control protocol data units.

12. The synchronization control apparatus in accordance with claim 11, wherein said transmission window is a time window or a window of the number of radio link control service data units.

13. The synchronization control apparatus in accordance with claim 12, wherein said length indicator and the extension bit of each radio link service data unit occupy 2 bytes.

14. The synchronization control apparatus in accordance with claim 8, wherein said radio link control protocol data unit includes a frame information field, a protocol data unit sequence number, and an extension bit corresponding to said sequence number.
